# EUROPEAN PATENT SPECIFICATION

(11) **EP 4 479 726 B1**
(45) Date of publication and mention of the grant of the patent: **09.09.2026**
(21) Application number: 23710084.7
(22) Date of filing: 17.02.2023
(51) Int. Cl.: G01N 1/40, G01N 1/22

(54) **SYSTEM AND METHOD FOR OBTAINING GAS SAMPLES**
SYSTEM UND VERFAHREN ZUR GEWINNUNG VON GASPROBEN
SYSTÈME ET PROCÉDÉ D'OBTENTION D'ÉCHANTILLONS DE GAZ

(30) Priority: 17.02.2022 IT 202200002924
(43) Date of publication of application: 25.12.2024
(73) Proprietor: NC TECHNOLOGIES S.R.L., 20151 Milano (IT)
(72) Inventor: VOLAKAKIS, Emmanouil, 20020 Lainate (IT)
(74) Representative: Pizzoli, Antonio Mario
(86) International application number: PCT/IB2023/051439
(87) International publication number: WO 2023/156948

(56) References cited:
- WO-A1-2021/056943
- US-B2- 9 403 122

## Description

### Technical field

The present description relates to a system for obtaining gas samples, in particular for a subsequent spectrometric analysis of CO2 (carbon dioxide) contained in these samples. The present description also relates to a method which can be carried out by such a system.

### Background of the description

Known systems (see e.g. WO 2021/056943 A1) for obtaining gas samples comprise a series of devices which filter elements or chemical compounds from a gas to be treated, in particular air. However, these known systems are relatively inefficient, expensive and/or slow, in particular for obtaining CO2 samples for spectrometric analyses.

### Summary of the description

Object of the present description is therefore to provide a system free from these drawbacks. Said object is achieved with a system and a method, the main features of which are specified in the attached claims, to be considered an integral part of the present description.

Gas samples can be obtained in a relatively efficient, economic and quick way thanks to the particular combination of components employed in the system and method according to the present description.

Thanks to its architecture, which preferably includes a particular purging circuit, the system can concentrate and purge CO2 in an optimized way, above all to perform analyzes of both stable and radiogenic carbon isotopes in atmospheric CO2.

The system and the method allow to produce a relatively high volume of substantially pure samples of CO2, for example 10-100 mg samples in 10-60 minutes, in particular when the gas to be treated is air or other gas mixture.

The system, again thanks to its particular architecture, can be controlled in a completely automatic way by an electronic control unit, so as to carry out the method efficiently, easily and precisely.

The VOC trap and/or the CO2 trap of the system are preferably regenerable and/or provided with heating means in order to desorb previously adsorbed gases in a controlled manner, in particular to purge the VOC trap and/or to release the captured CO2 from the CO2 trap.

The H2O trap employed in the system and/or method preferably comprises a membrane dryer connected to a chemical H2O trap.

The H2O trap is preferably arranged downstream of the VOC trap, so as to improve the efficiency and speed in the removal of volatile organic compounds and/or H2O from the gas to be treated.

The system of the present description can be advantageously connected to the system described in EP 3575786 for the analysis of chemical elements in organic compounds, so as to obtain a synergistic effect which significantly improves the quality of the analyzes performed by a plant comprising these systems.

### Brief description of the drawings

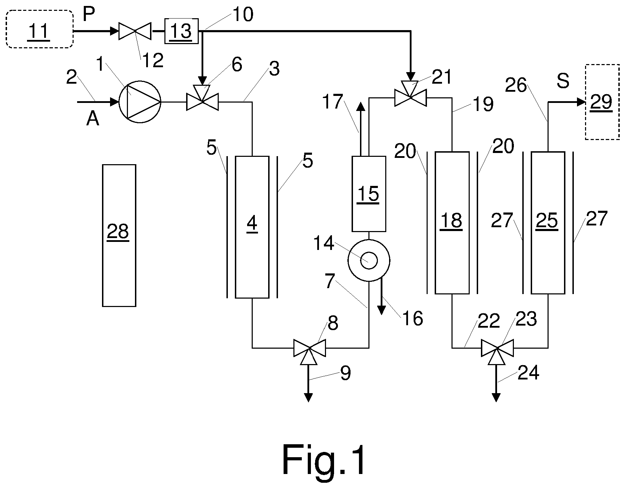

Further advantages and features of the system and method according to the present description will become apparent to those skilled in the art from the following detailed description of some embodiments thereof, to be considered non-limiting examples of the claims, with reference to the attached drawings in which figure 1 shows a schematic block diagram of an embodiment of the system.

### Explanatory embodiments

In the present description, a connection may be achieved by at least one duct allowing a gas flow between at least two components of the system.

Figure 1 shows an embodiment of the system, in which a pump 1 can draw a gas A to be treated, for example air, biogas, industrial exhausts or other gas mixtures, from at least one inlet duct 2. The pump 1 is connected through at least one first intermediate duct 3 to at least one VOC trap 4, namely a device suitable for separating volatile organic compounds (VOC) from a gas. The VOC trap 4 can comprise a container containing adsorbent substances, preferably based on aluminosilicates, which adsorb volatile organic compounds contained in the gas A. The VOC trap 4 is preferably regenerable, namely it can be provided with heating means 5, in particular electric resistors, to heat the adsorbent substances and therefore desorb the volatile organic compounds adsorbed by the VOC trap 4. The first intermediate duct 3 can be provided with at least one first valve 6, for example a three-way solenoid valve, suitable to be connected to a source of purging gas P, so that the purging gas P can flow into the VOC trap 4 to expel the volatile organic compounds released by means of the heating means 5. The VOC trap 4 is connected to a second intermediate duct 7 to release the filtered gas A from the VOC trap 4 and/or the purging gas P mixed with the volatile organic compounds. The second intermediate duct 7 can be provided with at least one second valve 8, for example a three-way solenoid valve, suitable to be connected to a first exhaust duct 9, in particular to release the purging gas P with the volatile organic compounds outside of the system.

The purging gas P can come from an auxiliary duct 10 which can be connected to the first valve 6 and to a source 11, for example a helium cylinder. The auxiliary duct 10 can be provided with at least a third valve 12, for example a two-way solenoid valve, and/or with a flow regulator 13, for example an electro-pneumatic regulator.

The VOC trap 4 is connected, in particular through at least the second intermediate duct 7, to at least one H2O trap 14, 15 suitable for separating H2O, in particular water vapour, from a gas. In particular, the H2O trap 14, 15 can comprise a membrane dryer 14, for example a Perma Pure^{®} membrane dryer, which is in turn connected to a chemical trap 15 of H2O, in particular a chemical trap based on magnesium perchlorate. The H2O trap 14, 15 can release the water vapor separated from the gas A through one or more exhaust ducts 16, 17.

The H2O trap 14, 15 is connected to a CO2 trap 18, in particular through at least a third intermediate duct 19. The CO2 trap 18 is suitable for capturing CO2 from a gas, in particular from gas A filtered by the H2O trap 14, 15. The CO2 trap 18 can comprise a container containing adsorbent substances, preferably based on zeolites, which adsorb the CO2 contained in gas A. The CO2 trap 18 can be regenerated, namely it can be provided with heating means 20, in particular electric resistors, for heating the adsorbing substances and desorbing CO2 which is released by the CO2 trap 18.

The third intermediate duct 19 can be provided with at least a fourth valve 21, for example a three-way solenoid valve, suitable to be connected to a source of carrier gas to release the desorbed CO2 from the CO2 trap 18 by means of the heating means 20 The purging gas P can be used as the carrier gas, in which case the fourth valve 21 can be connected to the auxiliary duct 10.

The CO2 trap 18 is connected to at least one fourth intermediate duct 22 to release the filtered gas A from the CO2 trap 18 and/or the carrier gas mixed with CO2. The fourth intermediate duct 22 can be provided with at least a fifth valve 23, for example a three-way solenoid valve, which can be connected to an exhaust duct 24 to release the gas A filtered by the CO2 trap 18 outside the system.

The CO2 trap 18 is connected at least through the fourth intermediate duct 22 to at least one reducer 25 suitable for reducing nitrogen oxides (NOx) and/or sulfur oxides (SOx) contained in the carrier gas with CO2 flowing through the reducer 25, to obtain a gas sample S. In particular, the reducer 25 can comprise a container containing reducing substances, preferably copper-based filaments, which react both with nitrogen oxides and with sulfur oxides, so that the gas sample S released by reducer 25 through an outlet 26 is substantially free from these oxides. The reducer 25 preferably comprises heating means 27, in particular electric resistors, for heating and activating the reducing substances.

The system preferably comprises an electronic control unit 28, in particular provided with microprocessor and memory, which is able to control, preferably in a programmed and/or programmable manner, the operation of the pump 1, of the valves 6, 8, 12, 21, 23, of the flow regulator 13 and/or of the heating means 5, 20, 27. For this purpose, the electronic control unit 28 is connected directly or indirectly, by means of electric or electromagnetic connections, with or without cable, to said components of the system to be controlled and/or to one or more sensors (not shown in the figure), suitable to measure one or more parameters of the system, such as for example flow rates, pressures and temperatures.

The outlet 26 can be connected to an external device 29, for example a CO2 analyzer for detecting carbon isotopes in the sample gas S.

In use, during a first step of the method according to the present description, in which CO2 is captured by the CO2 trap 18, the pump 1 draws from the inlet duct 2 the gas A to be treated, which flows at a pressure greater than 1 bar, for example approx. 1.03 bar and/or with a flow rate of approx. 5 I/min, via VOC trap 4, H2O trap 14, 15 and CO2 trap 18, which filter gas A, after which the filtered gas A can be released through the exhaust duct 24. In this phase, the valves 6, 8, 21 allow the flow of gas A along the intermediate ducts 3, 7 and 19, while the valve 23 diverts the flow from the intermediate duct 22 to the exhaust duct 24. The heating means 5 of the VOC trap 4 and the heating means 20 of the CO2 trap 18 are switched off.

During a second step of the method, in which CO2 is released from the CO2 trap 18, a carrier gas, in particular the same purging gas P, can flow from the source 11 into the auxiliary duct 10, through the valve 21, which is open towards the intermediate duct 19 and enter the CO2 trap 18, which releases previously adsorbed CO2, as it is heated by the heating means 20, in particular at a temperature higher than 200°C, preferably higher than 400°C. The temperature of the CO2 trap 18 can vary according to the percentage of CO2 to be mixed with the carrier gas. During this phase, the valve 23 allows the flow of gas along the intermediate duct 22, so that the carrier gas mixed with the CO2 released from the CO2 trap 18 is reduced by the reducer 25, which is heated by the heating means 27, in particular at a temperature higher than 350°C, to obtain a sample gas S, which is in turn emitted by the reducer 25 from the outlet 26, for example to be treated afterwards by the external device 29.

In a purge step, in which volatile organic compounds are released by the VOC trap 4, the purging gas P flows from the auxiliary duct 10 to the valve 6, which is open towards the intermediate duct 3, and enters the VOC trap 4, which desorbs the previously adsorbed volatile organic compounds as it is heated by the heating means 5, in particular at a temperature higher than 400°C. In this phase, the valve 8 connects the intermediate duct 7 to the exhaust duct 9, so that the purging gas P mixed with the volatile organic compounds desorbed by the VOC trap 4 can be released through the exhaust duct 9.

In the present embodiment the H2O trap 14, 15 is preferably arranged downstream of the VOC trap 4, so that the removal of water vapor from the gas A to be treated takes place after the removal of volatile organic compounds. However, in an alternative embodiment, the H2O trap 14, 15 can be arranged upstream of the VOC trap 4. Variations or additions can be made by those skilled in the art to the embodiments described and illustrated herein while remaining within the scope of the following claims.

## Claims

1. System for obtaining gas samples (S), which comprises at least one VOC trap (4) suitable to separate volatile organic compounds from a gas (A) to be treated, wherein the VOC trap (4) is connected to at least one H2O trap (14, 15) suitable to separate H2O from the gas (A) to be treated, wherein the H2O trap (14, 15) is connected to at least one CO2 trap (18) suitable to capture CO2 from the gas (A) to be treated, wherein the CO2 trap (18) comprises a container containing substances suitable for adsorbing and desorbing CO2, wherein the CO2 trap (18) is provided with heating means (20) for heating the adsorbing substances of the CO2 trap (18) and releasing the CO2 captured by the CO2 trap (18), wherein the CO2 trap (18) is connected to at least one reducer (25) suitable to reduce nitrogen and/or sulphur oxides contained in the CO2 released by the CO2 trap (18), wherein the CO2 trap (18) is connected to the reducer (25) by means of at least one intermediate duct (22) provided with at least one valve (23) connected to an exhaust duct (24).

2. Method for obtaining gas samples (S), which comprises the following operative steps:
- at least one VOC trap (4) separates volatile organic compounds from a gas (A) to be treated;
- at least one H2O trap (14, 15) separates H2O from the gas (A) to be treated;
- at least one CO2 trap (18) captures CO2 from the gas (A) to be treated;
- the gas (A) to be treated, filtered by the VOC trap (4), the H2O trap (14, 15) and the CO2 trap (18), is released through an exhaust duct (24);
- the CO2 trap (18) releases the captured CO2;
- at least one reducer (25) reduces nitrogen and/or sulphur oxides contained in the CO2 released by the CO2 trap (18).

3. System or method according to one of the preceding claims, wherein the H2O trap (14, 15) is arranged downstream of the VOC trap (4).

4. System or method according to one of the preceding claims, wherein the H2O trap (14, 15) comprises a membrane dryer (14) connected to an H2O chemical trap (15).

5. System or method according to one of the preceding claims, wherein the reducer (25) comprises a container containing reducing substances which react both with nitrogen oxides and with sulfur oxides.

6. System or method according to one of the preceding claims, wherein the VOC trap (4) and/or the reducer (25) are provided with heating means (5, 27) for heating adsorbing substances contained in the VOC trap (4) or reducing substances contained in the reducer (25), respectively.

7. System or method according to one of the preceding claims, wherein the VOC trap (4) is connected to at least one valve (6) connected to an auxiliary duct (10) suitable to be connected to a source (11) of purging gas (P), wherein the VOC trap (4) is also connected to at least one valve (8) connected to an exhaust duct (9) of the purging gas (P).

8. System or method according to one of the preceding claims, wherein the H2O trap (14, 15) is connected to the CO2 trap (18) by means of at least one intermediate duct (19) provided with at least one valve (21) connected to an auxiliary duct (10) suitable to be connected to a source (11) of carrier gas (P).

9. System or method according to one of the preceding claims, wherein the reducer (25) is connected through an outlet (26) to a CO2 analyzer (29) for detecting carbon isotopes in a gas sample (S) released by the reducer (25).

10. System according to one of the preceding claims, wherein an electronic control unit (28) is connected to one or more of said valves (6, 8, 21, 23), to one or more of said heating means (5, 20, 27) and/or to one or more sensors suitable to measure one or more parameters of the system.

11. Method according to one of claims 2 to 9, wherein an electronic control unit (28) is connected to one or more of said valves (6, 8, 21, 23), to one or more of said heating means (5, 20, 27) and/or to one or more sensors suitable to measure one or more parameters of the system which carries out the method.

## Patentansprüche

1. System zur Gewinnung von Gasproben (S), das mindestens eine VOC-Falle (4) umfasst, die zum Abscheiden flüchtiger organischer Verbindungen aus einem zu behandelnden Gas (A) geeignet ist, wobei die VOC-Falle (4) mit mindestens einer H2O-Falle (14, 15) verbunden ist, die zum Abscheiden von H2O aus dem zu behandelnden Gas (A) geeignet ist, wobei die H2O-Falle (14, 15) mit mindestens einer CO2-Falle (18) verbunden ist, die zum Abtrennen von CO2 aus dem zu behandelnden Gas (A) geeignet ist, wobei die CO2-Falle (18) einen Behälter umfasst, der Substanzen enthält, die zum Adsorbieren und Desorbieren von CO2 geeignet sind, wobei die CO2-Falle (18) mit Heizmitteln (20) zum Erwärmen der adsorbierenden Substanzen der CO2-Falle (18) und Freisetzen des von der CO2-Falle (18) abgetrennten CO2 versehen ist, wobei die CO2-Falle (18) mit mindestens einer Reduziervorrichtung (25) verbunden ist, die zum Reduzieren von Stickstoff- und/oder Schwefeloxiden geeignet ist, die in dem von der CO2-Falle (18) freigesetzten CO2 enthalten sind, wobei die CO2-Falle (18) mit der Reduziervorrichtung (25) über mindestens eine Zwischenleitung (22) verbunden ist, die mit mindestens einem mit einer Abgasleitung (24) verbundenen Ventil (23) versehen ist.

2. Verfahren zur Gewinnung von Gasproben (S), das die folgenden Arbeitsschritte umfasst:
- mindestens eine VOC-Falle (4) scheidet flüchtige organische Verbindungen aus einem zu behandelnden Gas (A) ab;
- mindestens eine H2O-Falle (14, 15) scheidet H2O aus dem zu behandelnden Gas (A) ab;
- mindestens eine CO2-Falle (18) trennt CO2 aus dem zu behandelnden Gas (A) ab;
- das zu behandelnde Gas (A), das durch die VOC-Falle (4), die H2O-Falle (14, 15) und die CO2-Falle (18) gefiltert wurde, wird durch eine Abgasleitung (24) freigesetzt;
- die CO2-Falle (18) setzt das abgetrennte CO2 frei;
- mindestens eine Reduziervorrichtung (25) reduziert Stickstoff- und/oder Schwefeloxide, die in dem von der CO2-Falle (18) freigesetzten CO2 enthalten sind.

3. System oder Verfahren nach einem der vorhergehenden Ansprüche, wobei die H2O-Falle (14, 15) stromabwärts der VOC-Falle (4) angeordnet ist.

4. System oder Verfahren nach einem der vorhergehenden Ansprüche, wobei die H2O-Falle (14, 15) einen Membrantrockner (14) umfasst, der mit einer chemischen H2O-Falle (15) verbunden ist.

5. System oder Verfahren nach einem der vorhergehenden Ansprüche, wobei die Reduziervorrichtung (25) einen Behälter umfasst, der reduzierende Substanzen enthält, die sowohl mit Stickstoffoxiden als auch mit Schwefeloxiden reagieren.

6. System oder Verfahren nach einem der vorhergehenden Ansprüche, wobei die VOC-Falle (4) und/oder die Reduziervorrichtung (25) mit Heizmitteln (5, 27) zum Erwärmen der in der VOC-Falle (4) enthaltenen adsorbierenden Substanzen bzw. der in der Reduziervorrichtung (25) enthaltenen reduzierenden Substanzen versehen sind.

7. System oder Verfahren nach einem der vorhergehenden Ansprüche, wobei die VOC-Falle (4) mit mindestens einem Ventil (6) verbunden ist, das mit einer Hilfsleitung (10) verbunden ist, die zum Verbinden mit einer Quelle (11) für Spülgas (P) geeignet ist, wobei die VOC-Falle (4) auch mit mindestens einem Ventil (8) verbunden ist, das mit einer Abgasleitung (9) für das Spülgas (P) verbunden ist.

8. System oder Verfahren nach einem der vorhergehenden Ansprüche, wobei die H2O-Falle (14, 15) mit der CO2-Falle (18) über mindestens eine Zwischenleitung (19) verbunden ist, die mit mindestens einem Ventil (21) versehen ist, das mit einer Hilfsleitung (10) verbunden ist, die zum Verbinden mit einer Quelle (11) für Trägergas (P) geeignet ist.

9. System oder Verfahren nach einem der vorhergehenden Ansprüche, wobei die Reduziervorrichtung (25) über einen Auslass (26) mit einem CO2-Analysator (29) verbunden ist, um Kohlenstoffisotope in einer von der Reduziervorrichtung (25) freigesetzten Gasprobe (S) nachzuweisen.

10. System nach einem der vorhergehenden Ansprüche, wobei eine elektronische Steuereinheit (28) mit einem oder mehreren der Ventile (6, 8, 21, 23), mit einem oder mehreren der Heizmittel (5, 20, 27) und/oder mit einem oder mehreren Sensoren verbunden ist, die zum Messen eines oder mehrerer Parameter des Systems geeignet sind.

11. Verfahren nach einem der Ansprüche 2 bis 9, wobei eine elektronische Steuereinheit (28) mit einem oder mehreren der Ventile (6, 8, 21, 23), mit einem oder mehreren der Heizmittel (5, 20, 27) und/oder mit einem oder mehreren Sensoren verbunden ist, die zum Messen eines oder mehrerer Parameter des Systems, welches das Verfahren durchführt, geeignet sind.

## Revendications

1. Système pour obtenir des échantillons de gaz (S), qui comprend au moins un piège à COV (4) approprié pour séparer les composés organiques volatils d'un gaz (A) à traiter, dans lequel le piège à COV (4) est relié à au moins un piège à H2O (14, 15) approprié pour séparer H2O du gaz (A) à traiter, dans lequel le piège à H2O (14, 15) est relié à au moins un piège à CO2 (18) approprié pour capturer CO2 du gaz (A) à traiter, dans lequel le piège à CO2 (18) comprend un récipient contenant des substances appropriées pour adsorber et désorber le CO2, dans lequel le piège à CO2 (18) est muni de moyens de chauffage (20) pour chauffer les substances adsorbantes du piège à CO2 (18) et libérer le CO2 capturé par le piège à CO2 (18), dans lequel le piège à CO2 (18) est relié à au moins un réducteur (25) approprié pour réduire les oxydes d'azote et/ou de soufre contenus dans le CO2 libéré par le piège à CO2 (18), dans lequel le piège à CO2 (18) est relié au réducteur (25) par des moyens d'au moins un conduit intermédiaire (22) muni d'au moins une vanne (23) reliée à un conduit d'échappement (24).

2. Procédé d'obtention d'échantillons de gaz (S), qui comprend les étapes opératoires suivantes :
- au moins un piège à COV (4) sépare les composés organiques volatils d'un gaz (A) à traiter ;
- au moins un piège à H2O (14, 15) sépare H2O du gaz (A) à traiter ;
- au moins un piège à CO2 (18) capture CO2 du gaz (A) à traiter ;
- le gaz (A) à traiter, filtré par le piège à COV (4), le piège à H2O (14, 15) et le piège à CO2 (18), est libéré par un conduit d'échappement (24) ;
- le piège à CO2 (18) libère le CO2 capturé ;
- au moins un réducteur (25) réduit les oxydes d'azote et/ou de soufre contenus dans le CO2 libéré par le piège à CO2 (18).

3. Système ou procédé selon l'une des revendications précédentes, dans lequel le piège à H2O (14, 15) est disposé en aval du piège à COV (4).

4. Système ou procédé selon l'une des revendications précédentes, dans lequel le piège à H2O (14, 15) comprend un séchoir à membrane (14) relié à un piège chimique à H2O (15).

5. Système ou procédé selon l'une des revendications précédentes, dans lequel le réducteur (25) comprend un récipient contenant des substances réductrices qui réagissent à la fois avec les oxydes d'azote et avec les oxydes de soufre.

6. Système ou procédé selon l'une des revendications précédentes, dans lequel le piège à COV (4) et/ou le réducteur (25) sont pourvus de moyens de chauffage (5, 27) pour chauffer les substances adsorbantes contenues dans le piège à COV (4) ou les substances réductrices contenues dans le réducteur (25), respectivement.

7. Système ou procédé selon l'une des revendications précédentes, dans lequel le piège à COV (4) est relié à au moins une vanne (6) reliée à un conduit auxiliaire (10) approprié pour être relié à une source (11) de gaz de purge (P), dans lequel le piège à COV (4) est également relié à au moins une vanne (8) reliée à un conduit d'échappement (9) du gaz de purge (P).

8. Système ou procédé selon l'une des revendications précédentes, dans lequel le piège à H2O (14, 15) est relié au piège à CO2 (18) au moyen d'au moins un conduit intermédiaire (19) muni d'au moins une vanne (21) reliée à un conduit auxiliaire (10) approprié pour être relié à une source (11) de gaz porteur (P).

9. Système ou procédé selon l'une des revendications précédentes, dans lequel le réducteur (25) est relié par une sortie (26) à un analyseur de CO2 (29) pour détecter les isotopes de carbone dans un échantillon de gaz (S) libéré par le réducteur (25).

10. Système selon l'une des revendications précédentes, dans lequel une unité de commande électronique (28) est reliée à une ou plusieurs desdites vannes (6, 8, 21, 23), à un ou plusieurs desdits moyens de chauffage (5, 20, 27) et/ou à un ou plusieurs capteurs appropriés pour mesurer un ou plusieurs paramètres du système.

11. Procédé selon l'une des revendications 2 à 9, dans lequel une unité de commande électronique (28) est reliée à une ou plusieurs desdites vannes (6, 8, 21, 23), à un ou plusieurs desdits moyens de chauffage (5, 20, 27) et/ou à un ou plusieurs capteurs appropriés pour mesurer un ou plusieurs paramètres du système qui met en œuvre le procédé.
